# FASCICULE DE BREVET EUROPEEN

(11) **EP 0 453 336 B1**
(45) Date de publication et mention de la délivrance du brevet: **10.11.1993**
(21) Numéro de dépôt: 91400710.9
(22) Date de dépôt: 15.03.1991
(51) Int. Cl.: F16B 29/00, B60N 3/02

(54) **Dispositif pour le réglage et la fixation d'un organe sur un support**
Vorrichtung zur Justierung und Befestigung eines Bauteiles an einer Halterung
Device for adjusting and fastening a part on a support

(30) Priorité: 20.03.1990 FR 9003553
(43) Date de publication de la demande: 23.10.1991
(73) Titulaire: AUTOMOBILES PEUGEOT, 75116 Paris (FR); AUTOMOBILES CITROEN, 92200 Neuilly-sur-Seine (FR)
(72) Inventeur: Jouanny, Thierry, F-92250 La Garenne Colombes (FR)
(74) Mandataire: Moncheny, Michel

(56) Documents cités:
- DE-A- 2 300 154
- DE-A- 3 228 051
- DE-U- 1 778 486
- US-A- 4 563 118

## Description

La présente invention concerne un dispositif pour le réglage et la fixation d'un organe sur un support.

L'invention vise plus particulièrement à permettre la mise en place d'un organe du type comportant un socle qui est maintenu serré sensiblement en appui plan contre un support au moyen d'un ensemble vis-écrou d'axe perpendiculaire au plan d'appui et un corps relié au socle.

Un tel organe peut par exemple être constitué par un accoudoir de portière de véhicule automobile dont on doit pouvoir assurer le réglage en position transversale par rapport au support constitué par la tôle intérieure de la portière et le réglage axial selon une direction perpendiculaire au plan de la portière.

En effet, dans le cas d'un accoudoir équipant une portière avant, il est nécessaire d'obtenir une bonne continuité entre les extrémités de la planche de bord et les accoudoirs des portières pour ne pas nuire au style de l'habitacle et fournir les meilleures conditions possibles de finition.

Compte tenu des tolérances de fabrication admises pour chacune des pièces, il est impossible d'avoir sur tous les véhicules des jeux identiques de sorte qu'il est nécessaire de pouvoir régler, au montage, la position relative de l'accoudoir par rapport à la planche de bord.

La présente invention vise donc à proposer un dispositif pour le réglage en position correcte d'un accoudoir selon trois directions.

Le document DE-A-32 28 051 propose un dispositif pour le réglage en position et la fixation d'un organe de véhicule automobile sur un support au moyen d'un ensemble vis-écrou dans lequel le corps de la vis est reçu dans une ouverture formée dans le support et s'étend axialement à travers un manchon cylindrique expansible qui est reçu dans un évidement correspondant de l'organe et du type dans lequel une extrémité filetée de la vis est reçue dans un écrou de serrage dont une face coopère avec des moyens d'expansion radiale du manchon.

Un tel dispositif ne permet donc d'assurer le réglage de l'organe que selon une seule direction parallèle à l'axe de serrage.

Afin de remédier à cet inconvénient, l'invention propose un dispositif du type mentionné précédemment, caractérisé en ce que l'organe est du type comportant un socle qui est maintenu serré sensiblement en appui plan contre le support au moyen de l'ensemble vis-écrou dont l'axe est perpendiculaire au plan d'appui et du type comportant un corps relié au socle, la vis étant reçue dans l'ouverture formée dans le support avec une possibilité de déplacement selon deux directions orthogonales de réglage transversal parallèles audit plan, le manchon cylindrique expansible formant partie du socle et étant reçu dans un évidement correspondant du corps, et en ce que les moyens d'expansion comportent un cône d'expansion qui pénètre axialement dans le manchon sous l'effet du serrage de l'écrou.

Selon une variante, les moyens d'expansion comportent une bague en caoutchouc agencée à l'intérieur du manchon et qui prend appui par l'une de ses extrémités axiales contre un épaulement radial interne du manchon et dont l'autre extrémité axiale coopère avec un poussoir axial qui comprime la bague sous l'effet du serrage de l'écrou pour provoquer l'expansion radiale du manchon.

Selon une autre caractéristique de l'invention, la surface externe du manchon et/ou la surface interne correspondante de l'évidement est crantée radialement.

D'autres avantages de l'invention apparaîtront à la lecture de la description détaillée qui va suivre pour la compréhension de laquelle on se reportera aux dessins annexés dans lesquels :
- La figure 1 est une vue en section axiale d'un dispositif de réglage et de fixation selon l'invention pour la mise en place et le montage d'un accoudoir de portière de véhicule automobile ;
- la figure 2 est une vue similaire à celle de la figure 1 d'un second mode de réalisation du dispositif selon l'invention ; et
- la figure 3 est une vue en coupe à échelle agrandie d'un détail de réalisation du dispositif de la figure 2.

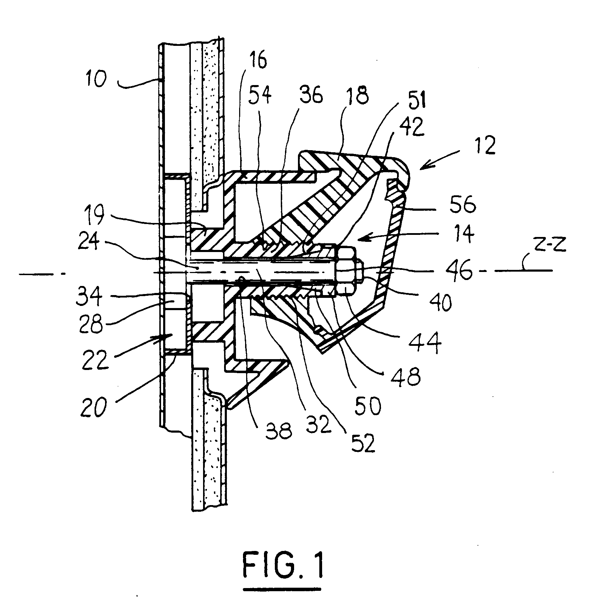

On a représenté à la figure 1 la tôle intérieure 10 d'une portière avant de véhicule automobile qui est montée articulée sur une partie de la structure du véhicule (non représenté) au voisinage de la planche de bord.

La portière reçoit un accoudoir avant 12 qui est mis en place et fixé sur la tôle intérieure 10 de la portière, qui constitue le support plan de l'accoudoir, au moyen du dispositif de réglage et de fixation 14.

L'accoudoir 12 comporte un socle 16 auquel est relié un corps d'habillage 18.

Le socle 16 est en appui plan par sa portion centrale 19 contre la face plane correspondante de la tôle 20 constitutive d'une cage de fixation 22 rapportée sur la tôle 10.

Le dispositif 14 comporte une vis 24 et un écrou 44, l'axe de cet ensemble vis-écrou étant sensiblement perpendiculaire aux plans des tôles 10 et 20.

La tête 28 de la vis 24 est reçue à l'intérieur de la cage 22 et prend appui contre la face interne de la tôle 20. Le corps 32 de la vis est reçu avec jeu transversal dans une ouverture 34 de la tôle 20 de la cage 22 pour permettre un déplacement de réglage transversal selon deux directions orthogonales parallèles aux plans des tôles 10 et 20.

La portion centrale 19 du socle 16 se prolonge vers l'intérieur de l'habitacle en direction du corps 18 par un manchon central 36 venu de matière avec la portion centrale 19.

Le manchon 36 est un manchon cylindrique dont l'alésage interne 38 est traversé par le corps 32 de la vis.

L'extrémité libre filetée 40 de la vis s'étend axialement au-delà de la face radiale libre d'extrémité 42 du manchon 36 pour recevoir un écrou de serrage 44.

Entre la face d'extrémité 42 et la face en vis-à-vis 46 de l'écrou 44 est reçu un épaulement radial externe 48 d'un cône de serrage 50 dont le corps s'étend axialement à l'intérieur d'une portion conique complémentaire 51 de l'alésage interne 38 du manchon 36.

La coopération de l'écrou 44 avec le cône 50, par l'intermédiaire de son épaulement radial 48, et du manchon cylindrique 36 qui est réalisé en un matériau déformable élastiquement, constitue un manchon expansible radialement sous l'action du serrage de l'écrou 44.

La surface cylindrique externe crantée radialement 52 du manchon expansible 36 est reçue dans un alésage cylindrique cranté complémentaire 54 du corps 18.

Avant le serrage axial de l'ensemble à l'aide de l'écrou 44, il est possible de déplacer le corps 18 par rapport au socle 16 selon une direction de réglage axial Z-Z perpendiculaire au plan des tôles 10 et 20, puis, sous l'effet du serrage de l'écrou 44, d'une part de bloquer axialement en position le corps 18 par rapport au socle 16 du fait de l'expansion du manchon radial 36 et, d'autre part, d'immobiliser l'ensemble 16 - 18 par rapport à la tôle 10 de la portière du fait du serrage axial de la tête de la vis contre la face interne 30 de la cage 22.

L'accès à l'écrou de serrage 44 est rendu possible par un cache amovible 56 du corps 18 de l'accoudoir.

Grâce au dispositif qui vient d'être décrit, l'opérateur peut ainsi réaliser de manière simple et rapide un réglage en position de l'accoudoir 12 selon trois directions.

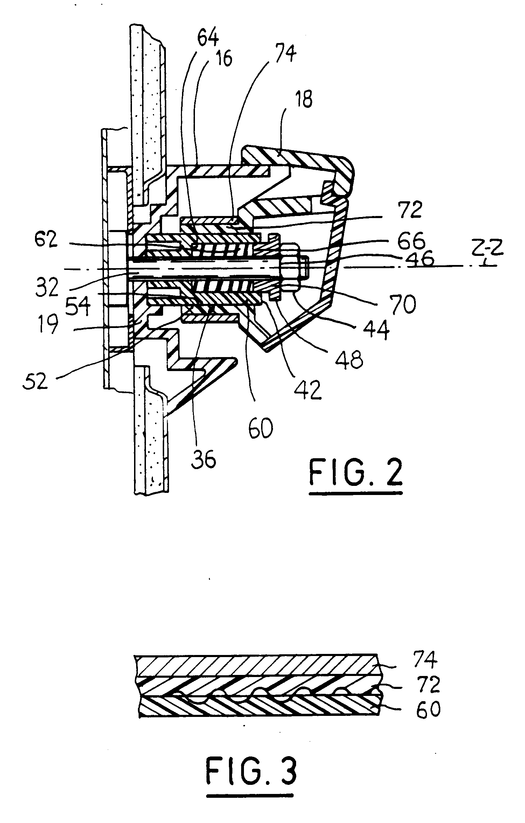

On décrira maintenant le second mode de réalisation de l'invention représenté aux figures 2 et 3 sur lesquelles les mêmes chiffres de référence sont utilisés pour désigner des éléments identiques ou similaires à ceux représentés à la figure 1.

Dans ce mode de réalisation, le manchon expansible 36 est un pièce rapportée ou non dans la portion centrale 19 du socle 16.

Le manchon 36 comporte une portion axiale amincie en forme de virole 60 à l'intérieur de laquelle est agencée une bague en caoutchouc 62 qui est traversée par le corps 32 de la vis.

La première extrémité axiale de la bague 62 tournée vers la portion centrale 19 prend appui contre un épaulement radial interne 64 du manchon expansible 36 tandis que son extrémité radiale opposée est en appui contre la face radiale interne en vis-à-vis 66 d'un poussoir axial de compression 70.

Le poussoir 70 est, comme dans le cas du cône d'expansion 50 muni d'un épaulement radial externe 48 avec lequel coopère la face 46 de l'écrou de serrage 44 pour provoquer la compression de la bague en caoutchouc 62 et ainsi l'expansion radiale de la portion amincie 60 du manchon expansible 36.

La surface cylindrique externe 52 du manchon 36 est reçue dans un alésage cylindrique complémentaire 54 du socle 18 formé dans une partie en forme de virole 72 qui est renforcée extérieurement par une douille métallique complémentaire 74.

Comme on peut le voir sur le détail de réalisation représenté à la figure 3, la surface cylindrique externe de la portion amincie 60 et la surface cylindrique interne de la portion en forme de manchon 62 sont toutes les deux crantées radialement pour permettre un réglage précis en position axiale du corps 18 par rapport au socle 16 avant l'expansion de la partie amincie 60 par serrage axial de l'écrou 44.

A la figure 2, l'ensemble est représenté en position non serrée, l'opérateur n'ayant plus, après avoir réalisé les différents réglages, qu'à serrer l'écrou 44 jusqu'à ce que l'épaulement radial 48 du poussoir de compression 70 vienne en appui contre la face axiale d'extrémité 42 du manchon 36, la face 46 de l'écrou 44 étant ainsi également en appui indirect contre cette face axiale 42.

## Revendications

1. Dispositif (14) comprenant un organe (12) et un support (10,20) pour le réglage et la fixation de l'organe (12) sur le support (10, 20) au moyen d'un ensemble vis-écrou (24, 44) dans lequel le corps (32) de la vis est reçu dans une ouverture (34) formée dans le support et s'étend axialement à travers un manchon (36) cylindrique expansible qui est reçu dans un évidement correspondant (54) de l'organe et du type dans lequel une extrémité filetée (40) de la vis est reçue dans un écrou de serrage (44) dont une face (46) coopère avec des moyens (50, 62) d'expansion radiale du manchon, caractérisé en ce que l'organe (12) est du type comportant un socle (16) qui est maintenu serré sensiblement en appui plan contre le support (20) au moyen de l'ensemble vis-écrou (24, 44) dont l'axe est perpendiculaire au plan d'appui et du type comportant un corps (18) relié au socle (16), la vis étant reçue dans l'ouverture (34) formée dans le support (20) avec une possibilité de déplacement selon deux directions orthogonales de réglage tranversal parallèles audit plan, le manchon cylindrique expansible formant partie du socle et étant reçu dans un évidement correspondant (54) du corps (18), et en ce que lesdits moyens d'expansion comportent un cône d'expansion (50) qui pénètre axialement dans le manchon (36) sous l'effet du serrage de l'écrou (44).

2. Dispositif (14) pour le réglage et la fixation d'un organe (12) sur un support (10, 20) au moyen d'un ensemble vis-écrou (24, 44) dans lequel le corps (32) de la vis est reçu dans une ouverture (34) formée dans le support et s'étend axialement à travers un manchon (36) cylindrique expansible qui est reçu dans un évidement correspondant (54) de l'organe et du type dans lequel une extrémité filetée (40) de la vis est reçue dans un écrou de serrage (44) dont une face (46) coopère avec des moyens (50, 62) d'expansion radiale du manchon, caractérisé en ce que l'organe (12) est du type comportant un socle (16) qui est maintenu serré sensiblement en appui plan contre le support (20) au moyen de l'ensemble vis-écrou (24, 44) dont l'axe est perpendiculaire au plan d'appui et du type comportant un corps (18) relié au socle (16), la vis étant reçue dans l'ouverture (34) formée dans le support (20) avec une possibilité de déplacement selon deux directions orthogonales de réglage tranversal parallèles audit plan, le manchon cylindrique expansible formant partie du socle et étant reçu dans un évidement correspondant (54) du corps (18), et en ce que lesdits moyens d'expansion comportent une bague en caoutchouc (62) agencée à l'intérieur du manchon (36) et qui prend appui par l'une de ses extrémités axiales contre un épaulement radial interne (64) du manchon (36) et dont l'autre extrémité axiale coopère avec un poussoir axial (70) qui comprime la bague (62) sous l'effet du serrage de l'écrou (44) pour provoquer l'expansion radiale du manchon.

3. Dispositif selon l'une des revendications 1 ou 2, caractérisé en ce que la surface externe (52) du manchon (36) et/ou la surface interne (54) correspondante de l'évidement est crantée radialement.

## Patentansprüche

1. Vorrichtung (14) mit einem Bauteil (12) und einer Halterung (10, 20) für die Justierung und Befestigung des Bauteils (12) an der Halterung (10, 20) mit Hilfe einer Verbindung aus Schraube und Mutter (24, 44), bei der der Körper (32) der Schraube in einer in der Halterung ausgebildeten Offnung (34) sitzt und sich axial durch eine zylindrische Dehnmuffe (36) erstreckt, die in einer entsprechenden Vertiefung (54) des Bauteils angeordnet ist und bei der ein Gewindeteil (40) der Schraube in einer Stellmutter (44) aufgenommen ist, deren eine Fläche (46) mit radialen Dehnmitteln (50, 62) der Muffe zusammenwirkt,
**dadurch gekennzeichnet, daß**
das Bauteil (12) von der Art ist, die einen Sockel (16) aufweist, der weitgehend in ebener Auflage an der Halterung (20) mittels einer Verbindung aus Schraube und Mutter (24, 44), deren Achse rechtwinklig zur Auflagefläche verläuft, festgestellt ist, und von der Art, die einen an dem Sockel (16) befestigten Körper (18) aufweist, wobei die Schraube in der in der Halterung (20) ausgebildeten Öffnung (34) mit der Möglichkeit einer Verschiebung in zwei orthogonalen Richtungen der seitlichen Justierung parallel zu dieser Ebene aufgenommen ist, und die zylindrische Dehnmuffe einen Teil des Sockels bildet und in einer entsprechenden Vertiefung (54) des Körpers (18) aufgenommen ist, und dadurch, daß diese Dehnmittel einen Druckring (50) enthalten, der axial unter der Wirkung der Feststellung der Mutter (44) in die Muffe (36) eindringt.

2. Vorrichtung (14) für die Justierung und Befestigung eines Bauteils (12) an einer Halterung (10, 20) mittels einer Verbindung aus Schraube und Mutter (24, 44), bei der der Körper (32) der Schraube in einer in der Halterung ausgebildeten Öffnung (34) sitzt und sich axial durch eine zylindrische Dehnmuffe (36) erstreckt, die in einer entsprechenden Vertiefung (54) des Bauteils aufgenommen und von der Art ist, bei der ein Gewindeteil (40) der Schraube in einer Stellmutter (44) aufgenommen ist, deren eine Fläche (46) mit Mitteln (50, 62) für die radiale Dehnung der Muffe zusammenwirkt,
**dadurch gekennzeichnet, daß**
das Bauteil (12) von der Art ist, die einen Sockel (16) aufweist, der weitgehend in ebener Auflage an der Halterung (20) mittels der Verbindung aus Schraube und Mutter (24, 44), deren Achse rechtwinklig zur Auflagefläche verläuft, festgestellt ist, und von der Art ist, die einen an dem Sockel (16) befestigten Körper (18) aufweist, wobei die Schraube in der in der Halterung (20) ausgebildeten Öffnung (34) mit der Möglichkeit einer Verschiebung in zwei orthogonalen Richtungen der seitlichen Justierung parallel zu dieser Ebene aufgenommen ist, und die zylindrische Dehnmuffe einen Teil des Sockels bildet und in einer entsprechenden Vertiefung (54) in dem Körper (18) aufgenommen ist, und dadurch, daß diese Dehnmittel einen Gummiring (62) enthalten, der innerhalb der Muffe (36) angeordnet ist und sich mit einem seiner axialen Enden an einer radialen Innenschulter (64) der Muffe (36) abstützt, und dessen anderes axiales Ende mit einem axialen Stößel (70) zusammenwirkt, der den Ring (62) unter der Wirkung der Feststellung der Mutter (44) zusammendrückt, um die axiale Dehnung der Muffe zu bewirken.

3. Vorrichtung nach einem der vorangegangenen Ansprüche 1 oder 2,
**dadurch gekennzeichnet, daß**
die Außenfläche (52) der Muffe (36) und/oder die entsprechende Innenfläche (54) der Vertiefung mit radialen Rippen versehen sind.

## Claims

1. Device (14) comprising a part (12) and a support (10, 20) for adjusting and fastening said part (12) on said support (10, 20) by means of a screw and nut arrangement (24, 44), wherein the body (32) of the screw is received in an opening (34) formed in said support and extends axially across an expandable cylindrical sleeve (36), which is received in a corresponding recess (54) in said part, and wherein a threaded end (40) of the screw is received in an adjusting nut (44), one face (46) of which cooperates with means (50, 62) for radial expansion of said sleeve, characterised in that said part (12) comprises a base (16) which is held closely against said support (20) essentially as a level support by means of the screw and nut arrangement (24, 44), the axis of which is perpendicular to the level support, and comprises a body (18) attached to the base (16), the screw being received in the opening (34) formed in said support (20) to permit movement in two orthogonal directions for cross adjustment parallel to said level, the expandable cylindrical sleeve forming part of said base and being received in a corresponding recess (54) of said body (18); that said expanding means comprise an expansion cone (50) which penetrates axially into the sleeve (36) when the nut (44) is tightened.

2. Device (14) for adjusting and fastening a part (12) on a support (10, 20) by means of a screw and nut arrangement (24, 44), wherein the body (32) of the screw is received in an opening (34) formed in said support and extends axially across an expandable cylindrical sleeve (36), which is received in a corresponding recess (54) in said part, and wherein a threaded end (40) of the screw is received in an adjusting nut (44), one face (46) of which cooperates with means (50, 62) for radial expansion of said sleeve, characterised in that said part (12) comprises a base (16), which is held closely against said support (20) essentially as a level support by means of the screw and nut arrangement (24, 44), the axis of which is perpendicular to the level support, and comprises a body (18) attached to the base (16), the screw being received in the opening (34) formed in said support (20) to permit movement in two orthogonal directions for cross adjustment parallel to said level, the expandable cylindrical sleeve forming part of said base and being received in a corresponding recess (54) of said body (18); that said expanding means comprise a rubber ring (62) fitted into the interior of the sleeve (36) and which is supported by one of its axial ends against an internal radial shoulder (64) of the sleeve (36), its other axial end cooperating with an axial tappet (70) which compresses the ring (62) when the nut (44) is tightened to effect said radial expansion of the sleeve.

3. Device according to one of Claims 1 or 2, characterised in that the external surface (52) of the sleeve (36) and/or the corresponding internal surface (54) of the recess is radially notched.
